# FASCICULE DE BREVET EUROPEEN

(11) **EP 1 512 897 B1**
(45) Date de publication et mention de la délivrance du brevet: **07.06.2006**
(21) Numéro de dépôt: 04292101.5
(22) Date de dépôt: 27.08.2004
(51) Int. Cl.: F16K 37/00

(54) **Système de robinetterie à indicateur de position**
Ventileinrichtung mit Stellungsanzeige
Valve system with position indicator

(30) Priorité: 04.09.2003 FR 0310459
(43) Date de publication de la demande: 09.03.2005
(73) Titulaire: KSB S.A.S, 92230 Gennevilliers (FR)
(72) Inventeur: Duboy, Dominique, 33170 Gradignan (FR); Dubois, Gilles, 33610 Cestas (FR)
(74) Mandataire: Eidelsberg, Victor Albert

(56) Documents cités:
- US-A- 3 701 362
- US-A- 5 035 195
- US-A- 5 921 277
- PATENT ABSTRACTS OF JAPAN vol. 2000, no. 13, 5 février 2001 (2001-02-05) & JP 2000 274557 A (SEIBU ELECTRIC & MACH CO LTD), 3 octobre 2000 (2000-10-03)

## Description

La présente invention se rapporte à un système de robinetterie, notamment un système de robinetterie monté dans un bâtiment de navigation par exemple un bateau ou un aéronef, constitué d'un robinet, notamment une vanne quart de tour, d'un actionneur (notamment hydraulique) du robinet et d'un système de signalisation de la position d'ouverture/fermeture du robinet, le système de signalisation comportant un arbre dont la rotation par rapport à son axe est fonction de l'ouverture/fermeture du robinet, et un drapeau monté solidaire en rotation de l'arbre.

La présente invention se rapporte également à un bâtiment de navigation, notamment un bateau ou un aéronef, comportant un ou plusieurs systèmes de robinetterie de ce genre.

Dans les systèmes de robinetterie de l'art antérieur, la liaison entre le drapeau et l'arbre est comme il se doit rigide. Lorsque l'arbre tourne, le drapeau tourne avec lui et indique ainsi à une personne à distance la position exacte d'ouverture/fermeture de la vanne, qui correspond à la rotation de l'arbre. Dans un bateau par exemple, et notamment à l'extérieur de celui-ci, les contraintes mécaniques sur le drapeau de visualisation sont particulièrement grandes. Ce drapeau, en général une plaque mince ayant une grande surface au vent, de poids faible par rapport à l'arbre et notamment de moment d'inertie par rapport à l'axe de l'arbre négligeable par rapport à celui de l'arbre, subit de fortes contraintes aussi bien en torsion qu'en flexion. Compte-tenu de la grande rigidité de la liaison entre le drapeau et l'arbre, ces contraintes mécaniques en torsion et flexion sont répercutées sur l'arbre. Celui-ci peut ainsi être amené à tourner légèrement sous l'effet de ces contraintes mécaniques extérieures, alors même que la vanne n'a pas elle changé de position. Il en résulte alors un positionnement erroné de l'arbre par rapport à l'ouverture/fermeture de la vanne, une orientation erronée du drapeau et donc une fausse indication fournie à la personne chargée de surveiller à distance la position du robinet.

La présente invention vise à surmonter ces inconvénients en proposant un système de robinetterie dont la signalisation par drapeau est rendue plus fiable que dans l'art antérieur, en garantissant en particulier que l'orientation du drapeau, quelles que soient les conditions atmosphériques et météorologiques subies par le bateau, correspond précisément à la position d'ouverture/fermeture ou au degré d'ouverture/fermeture du robinet.

Suivant l'invention, un système de robinetterie, constitué d'un robinet, d'un actionneur, notamment hydraulique, du robinet et d'un système de signalisation du degré d'ouverture du robinet, le système de signalisation comportant un arbre monté de sorte que sa rotation par rapport à son axe soit fonction du degré d'ouverture du robinet et un drapeau monté solidaire en rotation de l'arbre dans une position dite normale, est caractérisé en ce que les moyens de fixation du drapeau à l'arbre comportent un élément élastique tel que, sous l'effet d'une contrainte en torsion ou en flexion temporaire sur le drapeau, il permet une flexion et/ou une torsion du drapeau par rapport à l'arbre, puis un retour en position dite normale du drapeau, toute rotation de l'arbre étant elle transmise au drapeau.

L'invention rompt ainsi, d'une manière apparemment paradoxale, avec la liaison rigide du drapeau à l'arbre qui semblait aller de soi.

Mais en jouant sur les différences de moment d'inertie entre le drapeau et l'arbre, on obtient, d'une manière remarquable, la rigidité nécessaire dans un sens, celui de l'arbre au drapeau et que dans l'autre sens, l'élément élastique cède élastiquement.

Ainsi, en prévoyant un élément élastique pour la fixation du drapeau à l'arbre comme indiqué ci-dessus, lorsque le drapeau subit des grandes contraintes temporaires en flexion ou en torsion, le drapeau fléchit temporairement par rapport à l'arbre et les effets de ces contraintes mécaniques en torsion et en flexion sont amortis et absorbés par l'élément élastique sans être transmis à l'arbre qui, ainsi, ne change pas de position, ce qui garantit que la position relative ultérieure du drapeau et de l'arbre, après que les contraintes temporaires ont cessé, n'est pas modifiée et que le drapeau indique toujours bien l'état exact d'ouverture ou degré d'ouverture de la vanne du robinet. On a ainsi une signalisation exacte de la position de la vanne.

L'arbre est maintenant protégé vis-à-vis des efforts des contraintes mécaniques en flexion et en torsion transmises par le drapeau, de sorte que l'arbre a moins tendance à être faussé et l'étanchéité de l'arbre par rapport au boîtier de signalisation dans lequel il est monté est mieux maintenue, empêchant des entrées d'eau de mer le long de l'arbre, ce qui ainsi évite des courts-circuits électriques dans le boîtier de signalisation électrique, assurant l'intégrité des informations électriques transmises à l'opérateur, contrairement aux systèmes de l'art antérieur.

Suivant un mode de réalisation préféré de l'invention, l'élément élastique est un ressort, notamment un ressort hélicoïdal, dont une extrémité est montée à un bout de l'arbre et dont l'autre extrémité est fixée au drapeau.

Suivant un autre mode de réalisation préféré, l'élément élastique est constitué d'un élément élastomère fixé à un bout de l'arbre, d'une part, et au drapeau, d'autre part.

Suivant un mode de réalisation préféré de l'invention, le drapeau est une plaque et est fixé à l'élément élastique par sa tranche inférieure.

Suivant un mode de réalisation particulièrement préféré, l'arbre de signalisation est l'arbre de sortie d'un boîtier de signalisation électrique.

Grâce au système suivant l'invention, on évite ainsi que cet arbre de sortie soit faussé et que son étanchéité soit détériorée, ce qui provoquerait des introductions d'eau de mer dans le boîtier électrique, entraînant des courts-circuits qui pénalisent, voire détériorent complètement, le fonctionnement du boîtier de signalisation.

On décrit maintenant un mode de réalisation préféré de l'invention, uniquement à titre d'exemple, en se référant aux dessins, dans lesquels :

la figure 1 est une vue d'ensemble d'un système de robinetterie suivant l'invention ;

la figure 2 est une vue en perspective identique à la figure 1 représentant un autre mode de réalisation préféré de l'invention ; et

les figures 3A, 3B et 3C représentent une partie du dispositif représenté à la figure 2 représentant différents états possibles du drapeau par rapport au boîtier de signalisation, lorsqu'il subit des contraintes en torsion, flexion ou qu'il se trouve à un état où il ne subit pas de contraintes de ce genre.

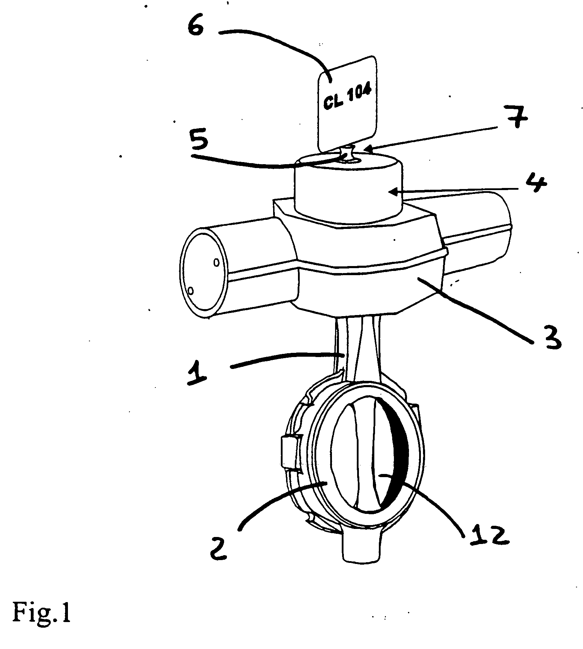

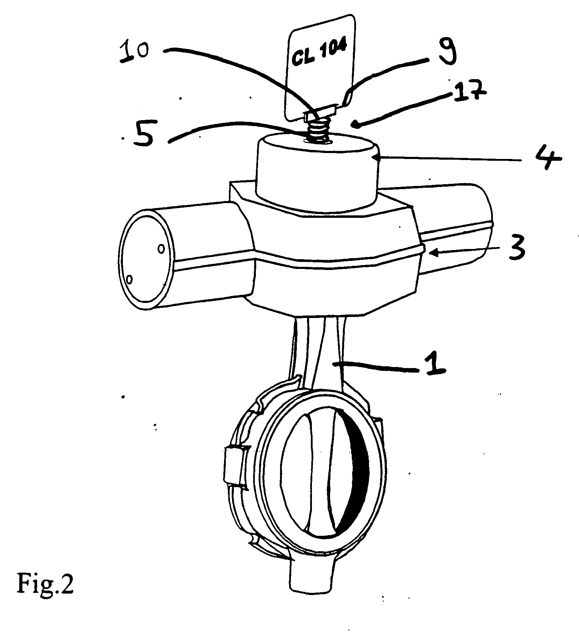

Le système 1 de robinetterie de la figure 1 ou de la figure 2 est constitué d'un robinet 2, qui est ici une vanne quart de tour mais qui pourrait être également une vanne linéaire ou tout autre type de vanne, d'un actionneur hydraulique 3, bien connu dans le domaine et que l'on ne décrit pas plus en détail ici et apte à faire tourner l'obturateur du robinet pour le faire passer d'une position de fermeture à une position d'ouverture et vice-versa, et d'un boîtier 4 de signalisation électrique. Le boîtier 4 de signalisation électrique comporte un arbre de sortie 5, dont la rotation par rapport au boîtier est fonction du degré d'ouverture de la vanne 12 du robinet 2. Lorsque la vanne 12 tourne d'un angle quelconque, le système 4 de signalisation électrique reçoit, d'une manière connue et qui n'est pas décrite de manière plus détaillée ici, un signal électrique, qui par l'intermédiaire d'un circuit électrique retransmet un signal de position à l'opérateur qui est fonction de l'angle de rotation de la vanne. Un drapeau 6 est fixé à l'extrémité supérieure de l'arbre 5. Le drapeau 6 a la forme d'une plaque rectangulaire mince et rigide, de couleur à haute visibilité.

A la figure 1, entre l'arbre 5 et la plaque 6, il est monté un élément 7 élastique élastomère ou plastomère, notamment en caoutchouc. Une personne sur un bateau peut voir à grande distance le drapeau et notamment son orientation et savoir ainsi si la vanne est ouverte ou fermée sans avoir à se déplacer sur place. Le moment d'inertie du drapeau ou de la plaque 6 par rapport à l'axe de l'arbre est négligeable par rapport à celui de l'arbre (d'un facteur supérieur à 100, de préférence supérieur à 1000). De même, le poids de la plaque est négligeable par rapport à celui de l'arbre, d'un facteur du même ordre que ci-dessus. Ainsi, lorsque l'arbre tourne, il entraîne l'élément 7 qui le fait tourner et avec lui le drapeau 6, tandis que le drapeau 6, sous l'effet d'une force qui le fait tourner par exemple sous l'action du vent n'entraîne que partiellement l'arbre en rotation, et contraint l'élément 7 élastique absorbant une partie du couple transmis.

En position normale, le drapeau est vertical. Sous l'effet d'une contrainte temporaire (vent, projections d'eau de mer, pluie, etc...), il va plier en une position inclinée par rapport à la verticale. Lorsque la contrainte temporaire cesse, sous l'effet de la force de rappel, de l'élément élastique ou du ressort, le drapeau reprend sa position verticale normale.

A la figure 2 un autre mode de réalisation est représenté. L'élément souple y est un ressort 17 hélicoïdal à spirale ou à lamelle, fixé d'une part à l'extrémité de l'arbre 5 et d'autre part fixé à la plaque 6, notamment au niveau de la tranche 9 inférieure de la plaque par l'intermédiaire d'une pince 10.

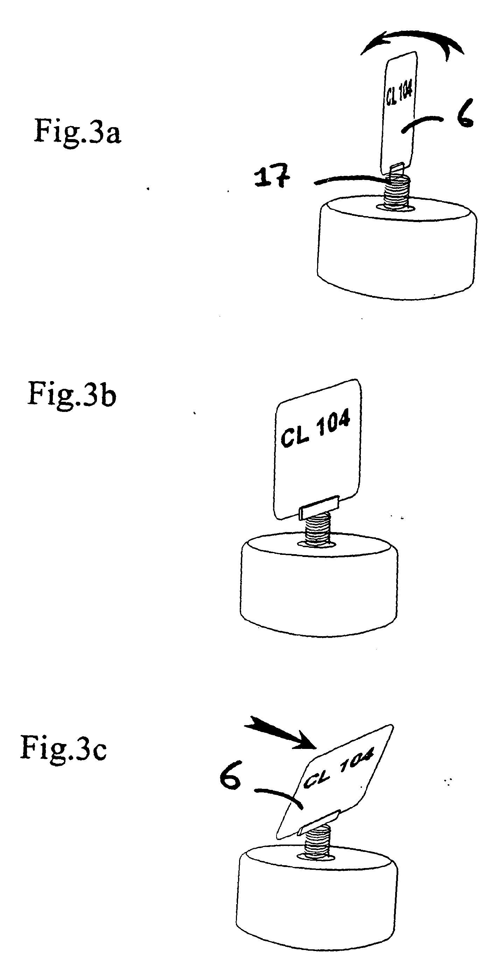

Comme on le voit à la figure 3, lorsque la plaque 6 subit une contrainte mécanique en torsion ou flexion sous l'effet de l'eau de mer ou du vent, elle fléchit au niveau de l'élément 17 de ressort ou de l'élément 7 élastomère, contrairement à l'art antérieur où elle restait fixe rigidement et répercutait sur l'arbre les contraintes qu'elle subissait. Il en résultait une légère déformation de l'arbre pouvant entraîner des fuites et un mauvais positionnement de l'arbre. Dans le système de la présente invention, le drapeau tourne et tend l'élément 17 élastique, lequel absorbe et fléchit au niveau des éléments élastiques et amortit les contraintes mécaniques que subit le drapeau 6 sans les répercuter totalement à l'arbre qui reste ainsi dans un état plus apte au fonctionnement à long terme.

En revanche, lorsque l'arbre tourne, l'élément 7 ou 17 transmet la rotation de l'arbre au drapeau, puisque l'élément 7 ou 17 est monté solidaire en rotation de l'arbre en ce qui concerne la rotation axiale.

## Revendications

1. Système (1) de robinetterie, constitué d'un robinet (2), d'un actionneur (3), notamment hydraulique, du robinet et d'un système de signalisation du degré d'ouverture du robinet, le système de signalisation comportant un arbre (5) monté de sorte que sa rotation par rapport à son axe soit fonction du degré d'ouverture du robinet et un drapeau (6) monté solidaire en rotation de l'arbre, dans une positon dite normale, **caractérisé en ce que** drapeau est fixé à l'arbre par moyen d'un élément (7 ; 17) élastique tel que, sous l'effet d'une contrainte en torsion ou en flexion temporaire sur le drapeau, il permet une flexion et/ou une torsion du drapeau (6) par rapport à l'arbre (5), puis un retour en la position dite normale, toute rotation de l'arbre (5) étant elle transmise au drapeau (6).

2. Système suivant la revendication 1, **caractérisé en ce que** l'élément élastique est un ressort (17), notamment un ressort hélicoïdal, dont une extrémité est monté à un bout de l'arbre et dont l'autre extrémité est fixée au drapeau.

3. Système suivant la revendication 1 ou 2, **caractérisé en ce que** l'élément élastique est constitué d'un élément (7) élastomère fixé à un bout de l'arbre, d'une part, et au drapeau, d'autre part.

4. Système suivant les revendications 1, 2 ou 3, **caractérisé en ce que** le drapeau est réalisé à partir d'une plaque et est fixé à l'élément élastique par l'intermédiaire de sa tranche (9) inférieure.

5. Système suivant les revendications 1, 2, 3 ou 4, **caractérisé en ce que** l'arbre de signalisation est l'arbre de sortie d'un boîtier (4) de signalisation électrique.

6. Système suivant l'une des revendications précédentes, **caractérisé en ce que** la position dite normale est une position verticale du drapeau.

7. Système suivant l'une des revendications 1 à 6, **caractérisé en ce que** le moment d'inertie du drapeau par rapport à l'axe est négligeable par rapport à celui de l'arbre, par exemple dans un rapport supérieur à 100, de préférence supérieur à 1000.

8. Navire, notamment bateau ou aéronef, comportant au moins un système suivant l'une des revendications 1 à 5.

## Claims

1. Valve system (1) consisting of a valve (2), of a valve actuator (3), in particular a hydraulic valve actuator, and of a system for signalling the degree of opening of the valve, the signalling system having a shaft (5) mounted so that its rotation with respect to its axis is a function of the degree of opening of the valve and having a flag (6) mounted to rotate as one with the shaft, in a "normal" position, **characterized in that** the flag is fixed to the shaft by means of an elastic element (7; 17) such that, under the effect of temporary torsional or bending stress on the flag, it allows bending and/or torsion of the flag (6) with respect to the shaft (5) and then a return to the "normal" position, any rotation of the shaft (5) being for its part transmitted to the flag (6).

2. System according to Claim 1, **characterized in that** the elastic element is a spring (17), particularly a helical spring, having one end mounted at one end of the shaft and the other end fixed to the flag.

3. System according to Claim 1 or 2, **characterized in that** the elastic element consists of an elastomeric element (7) fixed to one end of the shaft on the one hand and to the flag on the other hand.

4. System according to Claims 1, 2 and 3, **characterized in that** the flag is produced from a plate and is fixed to the elastic element by way of its lower portion (9).

5. System according to Claims 1, 2, 3 and 4, **characterized in that** the signalling shaft is the output shaft of an electric signal box (4).

6. System according to one of the preceding claims, **characterized in that** the "normal" position is a vertical position of the flag.

7. System according to one of Claims 1 to 6, **characterized in that** the moment of inertia of the flag with respect to the axis is negligible with respect to that of the shaft, for example in a ratio above 100, preferably above 1000.

8. Craft, in particular a boat or aircraft, comprising at least one system according to one of Claims 1 to 5.

## Patentansprüche

1. Armaturensystem (1), bestehend aus einem Ventil (2), einem insbesondere hydraulischen Betätiger (3) für das Ventil und einem Anzeigesystem für den Ventilöffnungsgrad, wobei das Anzeigesystem eine Welle (5), die so montiert ist, dass ihre Rotation bezüglich ihrer Achse abhängig vorn Grad der Öffnung des Ventils ist, und ein Kennzeichen (6) aufweist, das drehfest mit der Welle in einer als normal bezeichneten Position montiert ist, **dadurch gekennzeichnet, dass** das Kennzeichen an der Welle mittels eines elastischen Elements (7; 17) so befestigt ist, dass es unter der Auswirkung einer temporären Torsions- oder Biegebeanspruchung des Kennzeichens eine Biegung oder Verdrehung des Kennzeichens (6) relativ zur Welle (5) und danach eine Rückkehr in die als normal bezeichnete Position erlaubt, wobei jede Rotation der Welle (5) auf das Kennzeichen (6) übertragen wird.

2. System nach Anspruch 1, **dadurch gekennzeichnet, dass** das elastische Element eine Feder (17), insbesondere eine Spiralfeder ist, deren eines Ende am Wellenende montiert und deren anderes Ende am Kennzeichen befestigt ist.

3. System nach den Ansprüchen 1 oder 2, **dadurch gekennzeichnet, dass** das elastische Element aus einem Elastomerelement (7) besteht, das einerseits am Wellenende und andererseits am Kennzeichen befestigt ist.

4. System nach den Ansprüchen 1, 2 oder 3, **dadurch gekennzeichnet, dass** das Kennzeichen aus einer Platte gefertigt wird und am elastischen Element über seinen unteren Rand (9) befestigt ist.

5. System nach den Ansprüchen 1, 2, 3 oder 4, **dadurch gekennzeichnet, dass** die Signalwelle die Ausgangswelle eines Gehäuses (4) für eine elektrische Signalisierung ist.

6. System nach einem der vorherigen Ansprüche, **dadurch gekennzeichnet, dass** die als normal bezeichnete Position eine vertikale Position des Kennzeichens ist.

7. System nach einem der Anspruche 1 bis 6, **dadurch gekennzeichnet, dass** das axiale Trägheitsmoment des Kennzeichens gegenüber demjenigen der Welle vemachlässigbar ist, zum Beispiel in einem Verhältnis größer als 100, vorzugsweise größer als 1000.

8. Fahrzeug, insbesondere Schiff oder Flugzeug, das mindestens eines der Systeme nach einem der Ansprüche 1 bis 5 umfasst.
